# FASCICULE DE BREVET EUROPEEN

(11) **EP 0 543 728 B1**
(45) Date de publication et mention de la délivrance du brevet: **31.05.1995**
(21) Numéro de dépôt: 92403102.4
(22) Date de dépôt: 18.11.1992
(51) Int. Cl.: H01G 9/00

(54) **Condensateur à électrolyte solide, à polarité contrôlable, et élément de circuit le comportant**
Festelektrolytkondensator mit kontrollierbarer Polarität und diesen enthaltendes Schaltungselement
Solid electrolytic capacitor with controllable polarity and circuit element containing the same

(30) Priorité: 22.11.1991 FR 9114429
(43) Date de publication de la demande: 26.05.1993
(73) Titulaire: SPRAGUE FRANCE, F-37100 Tours Cédex (FR)
(72) Inventeur: Reynier, Michel, F-37000 Tours (FR); Gouvernelle, Didier, F-37360 Semblancay (FR)
(74) Mandataire: Rinuy, Santarelli

(56) Documents cités:
- EP-A- 0 228 122

## Description

L'invention concerne le contrôle de la polarité d'un condensateur à électrolyte solide, au tantale notamment, et d'un élément de circuit comportant un tel condensateur, en vue d'en garantir un montage correct dans un circuit.

Les condensateurs au tantale à électrolyte solide sont en général polarisés, c'est-à-dire qu'ils ont des bornes positive et négative respectivement. Il est donc indispensable que cette polarité soit respectée lors du montage de ces condensateurs au sein d'éléments de circuit, bien que ces condensateurs aient en pratique une forme globalement symétrique par rapport à un axe (le plus souvent : par rapport à un plan transversal contenant cet axe) et puissent donc être montés dans un "bon" et dans un "mauvais" sens. Ce contrôle de polarité est actuellement effectué sur les condensateurs pris isolément et il faut prendre garde ensuite à effectuer un bon positionnement avant fixation de ceux-ci au sein des éléments de circuits auxquels ils doivent être incorporés.

L'invention vise à permettre un contrôle aisé du montage d'un tel condensateur dans un circuit, et ce de manière automatisable.

L'invention propose à cet effet un condensateur à électrolyte solide comportant, noyé dans un bloc de résine électriquement isolante admettant globalement un axe de symétrie, un corps de condensateur muni de deux électrodes électriquement connectées respectivement à deux languettes de connexion débouchant hors du bloc pour constituer des bornes de sortie polarisées en deux zones de connexion disposées de part et d'autre d'un plan transversal du bloc contenant ledit axe, caractérisé en ce que, de ce bloc, débouche une troisième languette électriquement isolée vis à vis de chacune des bornes polarisées de sortie, dont l'extrémité forme une borne neutre située auprès d'une première de ces bornes polarisées en en étant séparée par un espace traversé de part en part depuis cette première borne jusqu'à cette borne neutre par une zone symétrique de la seconde de ces bornes polarisées par rapport à cet axe de symétrie.

En fait le principe d'un condensateur à trois pattes est déjà connu en soi, d'après le document EP-0.434.489 de la Demanderesse, dans une structure toutefois tout à fait différente de celle de l'invention puisque les deux languettes qui y sont disposées côte à côte, à l'opposé de la borne positive, sont toutes deux connectées électriquement à l'électrode négative du condensateur, l'une directement, l'autre au travers d'un fusible calibré ; la borne négative nominale était fermée sur la languette connectée à l'électrode négative au travers du fusible, tandis que l'autre languette ne servait qu'à vérifier l'intégrité du fusible.

Le document EP-A- 0 228 122 décrit un condensateur à trois pattes, dont l'une des deux électrodes est bifurquée pour assurer une polarité correcte lors du montage.

La fabrication d'un condensateur selon l'invention reprend toutefois avantageusement les étapes de découpe de languettes de ce document.

Selon des dispositions préférées de l'invention, éventuellement combinées :
- cet espace a, parallèlement au plan transversal du bloc une dimension constante inférieure à celle de cette seconde borne polarisée,
- cette première borne polarisée et cette borne neutre ont, parallèlement au plan transversal, des dimensions dont la somme est inférieure à celle de la seconde borne polarisée,
- cette première borne polarisée et cette borne neutre ont, parallèlement au plan transversal, des dimensions égales,
- cette troisième languette et la languette de connexion terminée par la première borne polarisée de sortie s'étendent parallèlement l'une à l'autre en dehors du bloc, perpendiculairement au plan transversal du bloc,
- cette première borne de sortie est constituée par la borne négative,
- le corps de condensateur comporte un coeur poreux en tantale.

L'invention propose également un élément de circuit comportant un support pourvu de deux plots de connexion, ainsi qu'un condensateur à électrolyte solide comportant, noyé dans un bloc de résine électriquement isolante admettant globalement un axe de symétrie, un corps de condensateur muni de deux électrodes électriquement connectées respectivement à deux languettes de connexion débouchant hors du bloc pour constituer des bornes de sortie polarisées en deux zones de connexion disposées de part et d'autre d'un plan transversal du bloc contenant ledit axe, et disposées en contact avec les plots de connexion du support, caractérisé en ce que, de ce bloc, débouche une troisième languette électriquement isolée vis à vis de chacune des bornes polarisées de sortie, dont l'extrémité forme une borne neutre située auprès d'une première de ces bornes polarisées en en étant séparée par un espace traversé de part en part depuis cette première borne jusqu'à cette borne neutre par une zone symétrique de la seconde de ces bornes polarisées par rapport à cet axe de symétrie, et en ce que ce support comporte un troisième plot en contact avec cette borne neutre et isolé vis-à-vis de chacun des plots de connexion et de chacune des bornes polarisées de sortie.

Selon des dispositions préférées de l'invention, éventuellement combinées :
- le plot de connexion en contact avec la première borne polarisée est séparée du troisième plot par un espace ayant, parallèlement au plan transversal, une dimension inférieure à celle de la seconde borne polarisée,
- le plot de connexion en contact avec la première borne de sortie a, parallèlement au plan transversal, une dimension inférieure à celle du plot de connexion en contact avec la seconde borne de sortie,
- le troisième plot en contact avec la borne neutre a, parallèlement au plan transversal, une dimension inférieure à la différence entre les dimensions des plots de connexion en contact avec les première et seconde bornes de sortie,
- le plot de connexion en contact avec la première borne de sortie et le troisième plot ont, parallèlement au plan transversal, des dimensions égales, et en ce que les dimensions de la première borne de sortie et de cette troisième languette sont égales,
- le corps de condensateur comporte un coeur poreux en tantale.

Des objets, caractéristiques et avantages de l'invention définie par les revendications 1 et 8 ressortent de la description qui suit, donnée à titre d'exemple non limitatif, en regard des dessins annexés sur lesquels :
- la figure 1 est une vue schématique en coupe d'un condensateur au tantale conforme à l'invention,
- la figure 1A en est le schéma électrique correspondant,
- la figure 2 est une vue en perspective de l'ensemble des languettes faisant partie de ce condensateur,
- la figure 3 est une vue de dessous du condensateur des figures 1 et 2, après repliage des languettes,
- la figure 4 est une vue de dessus d'un support destiné au montage du condensateur de la figure 3,
- la figure 5 est une vue de dessus d'un montage correct du condensateur de la figure 3 sur le support de la figure 4, et
- la figure 6 est une vue de dessus d'un montage incorrect de ce condensateur sur ce support.

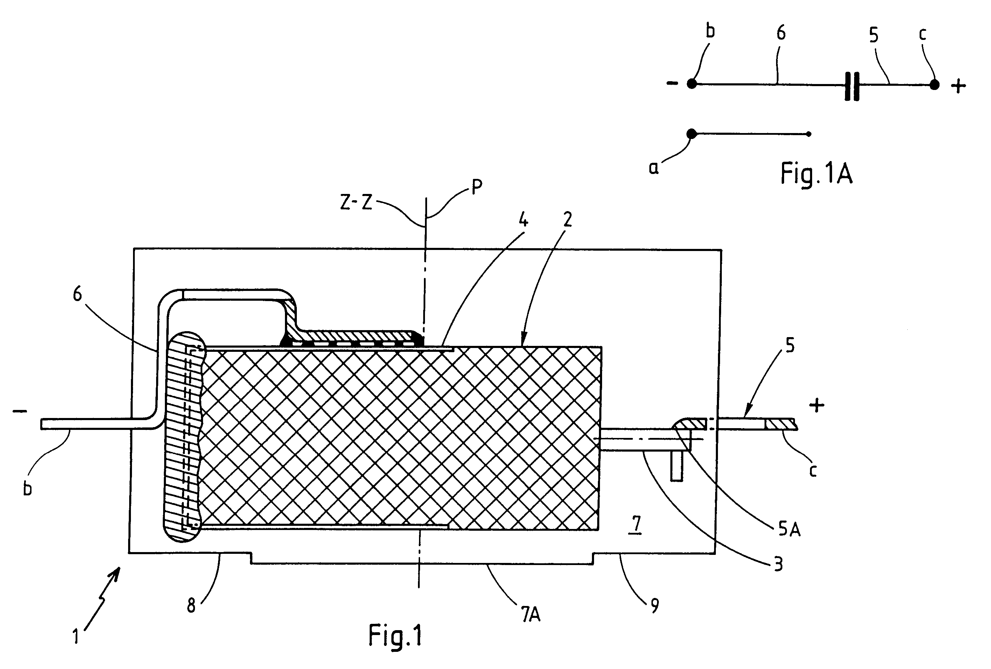

La figure 1 représente un condensateur au tantale 1 comportant un corps de condensateur 2 vis-à-vis duquel une tige d'anode 3 en tantale vient en saillie.

Ce corps de condensateur 2 est de tout type connu approprié avec un coeur poreux au tantale oxydé superficiellement, enrobé dans un électrolyte solide formé de dioxyde de manganèse et recouvert partiellement de diverses couches appropriées dont une couche extérieure de contr'électrode 4 isolée électriquement vis-à-vis de la tige d'anode 3.

Une languette conductrice de connexion positive 5 est fixée à la tige d'anode 3 (à la faveur d'une entaille 5A avantageusement prévue à cet effet) tandis qu'une languette conductrice de connexion négative notée 6 est fixée à la couche de contr'électrode 4.

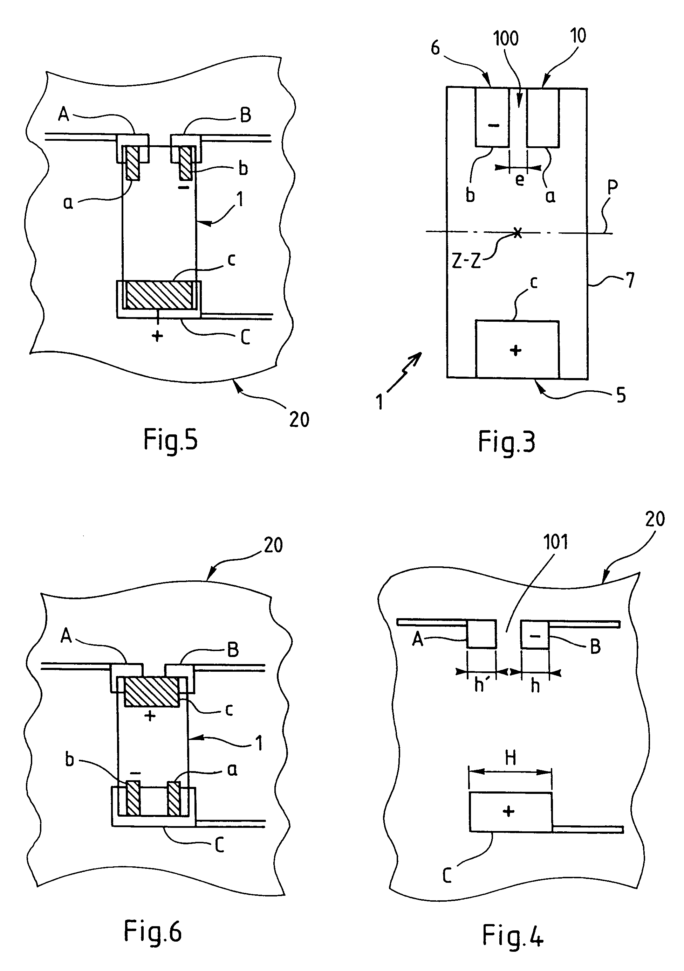

Le tout est enrobé dans un bloc parallélépipédique rectangle de matière isolante 7, en pratique une résine époxy de tout type approprié, de telle sorte que les languettes conductrices 5 et 6 viennent en saillie pour former par leurs extrémités c et b, des bornes de sortie + et -. Des creux 8 et 9 sont ménagés près d'arêtes opposées du bloc 7 pour permettre que ces extrémités libres c et b puissent se replier pour l'essentiel dans l'encombrement du bloc 7 (ce qui donne la configuration de la figure 3).

Le bloc admet globalement un axe de symétrie Z-Z perpendiculaire à la face 7A et ces creux définissent des zones de connexion disposées de part et d'autre d'un plan transversal P contenant cet axe de symétrie du bloc 7. De manière préférée, ces creux sont centrés aux extrémités de la face 7A, voire s'étendent tout au long des arêtes opposées précitées, en conséquence de quoi les zones de connexion sont en outre sensiblement symétriques l'une de l'autre par rapport à un plan transversal P contenant l'axe Z-Z.

L'extrémité b de la languette conductrice 6 définissant une borne de sortie négative a, parallèlement au plan P, une dimension inférieure à celle de la languette 5 définissant la borne de sortie positive. Cela explique que le plan de la coupe de la figure 1 coupe la languette 5 mais pas la languette 6 (sauf en sa zone de liaison au corps 2).

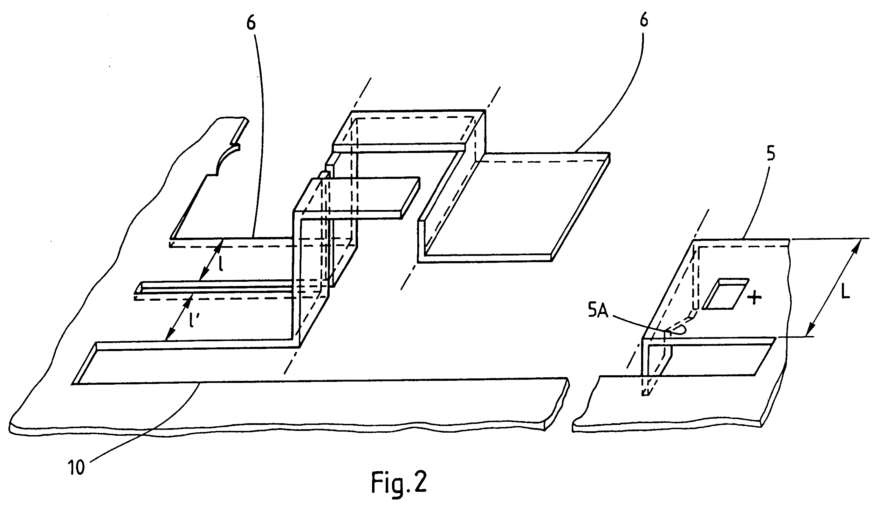

Ainsi qu'il ressort de la figure 2, une troisième languette 10 s'étend parallèlement à la languette de connexion 6 (donc perpendiculairement à P), débouche du corps 9 non représenté sur cette figure, jusque dans la zone de connexion contenant la borne négative formée par la languette 6.

Cette troisième languette 10 est électriquement isolée vis à vis de chacune des languettes 5 et 6.

L'extrémité a de cette languette 10 constitue une borne neutre qui a, parallèlement au plan P, une dimension l′ inférieure à la différence entre la dimension L de la borne de sortie c constituée par l'extrémité de la languette 5 et celle, l, de la borne de sortie b.

Les dimensions l et l′ sont ici égales.

Plus généralement les extrémités a et b sont séparées par un espace repéré 100 à la figure 3, disposé à l'opposé de l'extrémité c par rapport à l'axe Z-Z, ici de largeur constante e inférieure à la dimension L. Cet espace est traversé de part en part, depuis la borne b jusqu'à la borne a par une zone (non représentée pour des raisons de lisibilité du dessin) symétrique de la borne c par rapport à l'axe Z-Z.

Les diverses languettes apparaissant sur la figure 2 sont avantageusement obtenues par découpe d'une plaque, par analogie à ce qu'enseigne le document EP-0.434.489 précité.

Le condensateur, après repliage des pattes 5, 6 et 10 dans les creux 8 et 9 se présente, vu de dessous, comme dela est représenté sur la figure 3.

La figure 4 représente un élément de support de circuit 20 pourvu de trois plots, à savoir deux plots de connexion B et C destinés à être mis en contact avec les bornes de sortie respectivement négative b et positive c, ainsi qu'un plot de contrôle A destiné à venir en contact avec l'extrémité a de la troisième languette, tout en étant isolée des autres languettes et des autres plots.

Le plot B destiné à être en contact avec la borne négative b a, parallèlement à P, une dimension h inférieure à celle H du plot C, et le plot A a avantageusement une dimension h′ inférieure à la différence des dimensions précitées. Les dimensions h et h′ sont ici égales.

Plus généralement, les plots A et B sont séparés par un espace 101 de largeur e′ (ici constante) inférieure à la dimension L.

Dans l'exemple représenté, les bornes a, b et c définissent un rectangle plus petit que celui formé par les plots A, B et C.

La figure 5 représente une configuration correcte de montage dans laquelle, après montage, les plots A et B sont isolés puisqu'ils sont en contact avec les extrémités a et b des languettes 6 et 10 isolées l'une par rapport à l'autre.

La figure 6 représente par contre un montage incorrect du condensateur, dans le même encombrement vis à vis du support que dans la figure 5, mais où la borne positive c du condensateur est en contact avec le plot B tandis que la borne négative b est en contact avec le plot C.

Cela se reconnaît aisément par le fait que, grâce à la géométrie des plots et des languettes, les plots A et B sont mis en court-circuit par la borne positive.

Il est donc possible de détecter simplement, grâce à l'invention, un montage inverse du condensateur et donc d'en prévenir la destruction ainsi que celle de l'élément de circuit auquel ce condensateur serait incorporé, en cas de mise sous tension en cas de montage erroné.

Il va de soi que la description qui précède n'a été proposée qu'à titre d'exemple non limitatif et que de nombreuses variantes peuvent être proposées par l'homme de l'art sans sortir du cadre de l'invention définie par les revendications. Ainsi notamment les dimensions l et l′ peuvent être différentes ; d'autre part, le dessin formé par les bornes a, b et c (et par les plots A, B et C) peut être, au lieu d'un rectangle, un simple parallélogramme non rectangle.

## Revendications

1. Condensateur à électrolyte solide (1) comportant, noyé dans un bloc (7) de résine électriquement isolante admettant globalement un axe de symétrie (Z-Z), un corps de condensateur (2) muni de deux électrodes (3, 4) électriquement connectées respectivement à deux languettes de connexion (5, 6) débouchant hors du bloc (7) pour constituer des bornes de sortie polarisées (+, - ; c, b) en deux zones de connexion disposées de part et d'autre d'un plan transversal (P) du bloc contenant ledit axe, dudit bloc débouche une troisième languette (10) électriquement isolée vis à vis de chacune des bornes polarisées de sortie, dont l'extrémité forme une borne neutre située auprès d'une première (-, b) de ces bornes polarisées en en étant séparée par un espace (100) traversé de part en part depuis cette première borne jusqu'à cette borne neutre par une zone symétrique de la seconde (+, c) de ces bornes polarisées par rapport à cet axe de symétrie (Z-Z).

2. Condensateur selon la revendication 1, caractérisé en ce que cet espace (100) a, parallèlement au plan transversal du bloc une dimension constante (e) inférieure à celle (L) de cette seconde borne polarisée.

3. Condensateur selon la revendication 2, caractérisé en ce que cette première borne polarisée (-, b) et cette borne neutre ont, parallèlement au plan transversal, des dimensions (l, l′) dont la somme est inférieure à celle (L) de la seconde borne polarisée (+, c).

4. Condensateur selon la revendication 2 ou la revendication 3, caractérisé en ce que cette première borne polarisée (-, b) et cette borne neutre ont, parallèlement au plan transversal, des dimensions (l, l′) égales.

5. Condensateur selon l'une quelconque des revendications 1 à 4, caractérisé en ce que cette troisième languette (10) et la languette de connexion (6) terminée par la première borne polarisée de sortie s'étendent parallèlement l'une à l'autre en dehors du bloc, perpendiculairement au plan transversal du bloc.

6. Condensateur selon l'une quelconque des revendications 1 à 5, caractérisé en ce que cette première borne de sortie est constituée par la borne négative.

7. Condensateur selon l'une quelconque des revendications 1 à 6, caractérisé en ce que le corps de condensateur comporte un coeur poreux en tantale.

8. Elément de circuit comportant un support (20) pourvu de deux plots de connexion (B, C), ainsi qu'un condensateur à électrolyte solide (1) comportant, noyé dans un bloc (7) de résine électriquement isolante admettant globalement un axe de symétrie (Z-Z), un corps de condensateur (2) muni de deux électrodes (3, 4) électriquement connectées respectivement à deux languettes de connexion (5, 6) débouchant hors du bloc (7) pour constituer des bornes de sortie polarisées (+, -) en deux zones de connexion disposées de part et d'autre d'un plan transversal (P) du bloc contenant ledit axe, et disposées en contact avec les plots de connexion du support, dudit bloc débouche une troisième languette (10) électriquement isolée vis à vis de chacune des bornes polarisées de sortie, dont l'extrémité forme une borne neutre située auprès d'une première (-, b) de ces bornes polarisées en en étant séparée par un espace (100) traversé de part en part depuis cette première borne jusqu'à cette borne neutre par une zone symétrique de la seconde (+, c) de ces bornes polarisées par rapport à cet axe de symétrie (Z-Z), et en ce que ce support comporte un troisième plot (A) en contact avec cette borne neutre et isolé vis-à-vis de chacun des plots de connexion (B, C) et de chacune des bornes polarisées de sortie (-, b, +, c).

9. Elément selon la revendication 8, caractérisé en ce que le plot de connexion (B) en contact avec la première borne polarisée est séparée du troisième plot (A) par un espace (101) ayant, parallèlement au plan transversal, une dimension (e′) inférieure à celle (L) de la seconde borne polarisée (c).

10. Elément selon la revendication 8 ou la revendication 9, caractérisé en ce que le plot de connexion en contact avec la première borne de sortie (b) a, parallèlement au plan transversal, une dimension (h) inférieure à celle (H) du plot de connexion en contact avec la seconde borne de sortie.

11. Elément selon la revendication 10, caractérisé en ce que le troisième plot en contact avec la borne neutre a, parallèlement au plan transversal, une dimension (h′) inférieure à la différence entre les dimensions des plots de connexion en contact avec les première et seconde bornes de sortie.

12. Elément selon l'une quelconque des revendications 8 à 11, caractérisé en ce que le plot de connexion en contact avec la première borne de sortie et le troisième plot ont, parallèlement au plan transversal, des dimensions (h, h′) égales, et en ce que les dimensions (l, l′) de la première borne de sortie et de cette troisième languette sont égales.

13. Elément selon l'une quelconque des revendications 8 à 12, caractérisé en ce que le corps de condensateur comporte un coeur poreux en tantale.

## Patentansprüche

1. Kondensator mit festem Elektrolyt (1), der einen Kondensatorkörper (2) umfaßt, der in einen Block (7) aus elektrisch isolierendem Harz, der global eine Symmetrieachse (Z-Z) besitzt, eingebettet ist und mit zwei Elektroden (3, 4) versehen ist, die elektrisch jeweilig mit zwei Anschlußzungen (5, 6) verbunden sind, die aus dem Block (7) austreten, um polarisierte Ausgangsanschlüsse (+, -; c, b) in zwei Anschlußzonen zu bilden, die zu beiden Seiten einer Querebene (P) des Blocks angeordnet sind, die diese Achse enthält, in dem aus diesem Block eine dritte Zunge (10) austritt, die gegenüber jedem der polarisierten Ausgangsanschlüsse elektrisch isoliert ist und deren Ende einen neutralen Anschluß bildet, der bei einem ersten (-, b) dieser polarisierten Anschlüsse gelegen ist und von diesem durch einen Raum (100) getrennt ist, der von diesem ersten Anschluß bis zu diesem neutralen Anschluß durch eine Zone getrennt ist, die bezüglich dieser Symmetrieachse (Z-Z) zum zweiten (+, c) dieser polarisierten Anschlüsse symmetrisch ist.

2. Kondensator nach Anspruch 1, dadurch gekennzeichnet, daß dieser Raum (100) parallel zur Querebene des Blocks eine konstante Abmessung (e) hat, die kleiner als die (L) dieses zweiten polarisierten Anschlusses ist.

3. Kondensator nach Anspruch 2, dadurch gekennzeichnet, daß dieser erste polarisierte Anschluß (-, b) und dieser neutrale Anschluß parallel zur Querebene Abmessungen (l, l′) haben, deren Summe kleiner als die (L) des zweiten polarisierten Anschlusses (+, c) ist.

4. Kondensator nach Anspruch 2 oder Anspruch 3, dadurch gekennzeichnet, daß dieser erste polarisierte Anschluß (-, b) und dieser neutrale Anschluß parallel zur Querebene gleiche Abmessungen (l, l′) haben.

5. Kondensator nach einem der Ansprüche 1 bis 4, dadurch gekennzeichnet, daß diese dritte Zunge (10) und die Anschlußzunge (6), an deren Ende der erste polarisierte Ausgangsanschluß vorgesehen ist, sich parallel zueinander außerhalb des Blocks senkrecht zur Querebene des Blocks erstrecken.

6. Kondensator nach einem der Ansprüche 1 bis 5, dadurch gekennzeichnet, daß dieser erste Ausgangsanschluß vom negativen Anschluß gebildet ist.

7. Kondensator nach einem der Ansprüche 1 bis 6, dadurch gekennzeichnet, daß der Kondensatorkörper einen porösen Kern aus Tantal umfaßt.

8. Schaltungselement, umfassend einen Träger (20), der mit zwei Anschlußklötzen (B, C) versehen ist, sowie einen Kondensator mit festem Elektrolyt (1), der einen Kondensatorkörper (2) umfaßt, der in einen elektrisch isolierenden Harzblock (7), der global eine Symmetrieachse (Z-Z) besitzt, eingebettet ist und mit zwei Elektroden (3, 4) versehen ist, die elektrisch jeweilig mit zwei Anschlußzungen (5, 6) verbunden sind, die aus dem Block (7) austreten, um polarisierte Ausgangsanschlüsse (+, -) in zwei Anschlußzonen zu bilden, die zu beiden Seiten einer Querebene (P) des Blocks angeordnet sind, die diese Achse enthält, und in Kontakt mit den Anschlußklötzen des Trägers angeordnet sind, in dem aus diesem Block eine dritte Zunge (10) austritt, die gegenüber jedem der polarisierten Ausgangsanschlüsse elektrisch isoliert ist und deren Ende einen neutralen Anschluß bildet, der bei einem ersten (-, b) dieser polarisierten Anschlüsse gelegen ist und von diesem durch einen Raum (100) getrennt ist, der von diesem ersten Anschluß bis zum neutralen Anschluß von einer Zone durchquert ist, die bezüglich dieser Symmetrieachse (Z-Z) zum zweiten (+, c) dieser polarisierten Anschlüsse symmetrisch ist, und daß dieser Träger einen dritten Klotz (A) umfaßt, der mit diesem neutralen Anschluß in Kontakt ist und gegenüber jedem der Anschlußklötze (B, C) und jedem der polarisierten Ausgangsanschlüsse (-, b, +, c) isoliert ist.

9. Element nach Anspruch 8, dadurch gekennzeichnet, daß der Anschlußklotz (B), der mit dem ersten polarisierten Anschluß in Kontakt ist, von dem dritten Klotz (A) durch einen Raum (101) getrennt ist, der parallel zur Querebene eine Abmessung (e′) hat, die kleiner als die (L) des zweiten polarisierten Anschlusses (c) ist.

10. Element nach Anspruch 8 oder Anspruch 9, dadurch gekennzeichnet, daß der Anschlußklotz, der mit dem ersten Ausgangsanschluß (b) in Kontakt ist, parallel zur Querebene eine Abmessung (h) hat, die kleiner als die (H) des Anschlußklotzes ist, der mit dem zweiten Ausgangsanschluß in Kontakt ist.

11. Element nach Anspruch 10, dadurch gekennzeichnet, daß der dritte Klotz, der mit dem neutralen Anschluß in Kontakt ist, parallel zur Querebene eine Abmessung (h′) hat, die kleiner als die Differenz zwischen den Abmessungen der Anschlußklötze ist, die mit dem ersten und dem zweiten Ausgangsanschluß in Kontakt sind.

12. Element nach einem der Ansprüche 8 bis 11, dadurch gekennzeichnet, daß der Anschlußklotz, der mit dem ersten Ausgangsanschluß in Kontakt ist, und der dritte Klotz parallel zur Querebene gleiche Abmessungen (h, h′) haben und daß die Abmessungen (l, l′) des ersten Ausgangsanschlusses und dieser dritten Zunge gleich sind.

13. Element nach einem der Ansprüche 8 bis 12, dadurch gekennzeichnet, daß der Kondensatorkörper einen porösen Kern aus Tantal umfaßt.

## Claims

1. Solid-electrolyte capacitor (1) having, embedded in a block (7) of electrically insulating resin with overall a symmetry axis (Z-Z), a capacitor body (2) fitted with two electrodes (3, 4) electrically connected respectively to two connecting blades (5, 6) projecting out of the block (7) to constitute polarised output terminals (+, -; c, b) in two connection zones disposed on each side of a transverse plane (P) of the block containing the said axis, a third blade (10) projecting from this block, electrically isolated vis-a-vis each of the polarised output terminals and the end of which forms a neutral terminal situated close to a first one (-, b) of these polarised terminals, being separated from it by a space (100) with a zone passing right through it from this first terminal as far as this neutral terminal, the said zone being symmetrical with the second one (+, c) of these polarised terminals with respect to this symmetry axis (Z-Z).

2. Capacitor according to Claim 1, characterised in that this space (100) has, parallel to the transverse plane of the block, a constant dimension (e) less than that (L) of this second polarised terminal.

3. Capacitor according to Claim 2, characterised in that this first polarised terminal (-, b) and this neutral terminal have, parallel to the transverse plane, dimensions (l, l′), the sum of which is less than the dimension (L) of the second polarised terminal (+, c).

4. Capacitor according to Claim 2 or Claim 3, characterised in that this first polarised terminal (-, b) and this neutral terminal have, parallel to the transverse plane, equal dimensions (l, l′).

5. Capacitor according to any one of Claims 1 to 4, characterised in that this third blade (10) and the connecting blade (6) terminating in the first polarised output terminal lie parallel to one another outside the block, perpendicularly to the transverse plane of the block.

6. Capacitor according to any one of Claims 1 to 5, characterised in that this first output terminal consists of the negative terminal.

7. Capacitor according to any one of Claims 1 to 6, characterised in that the capacitor body has a porous tantalum core.

8. Circuit component including a support (20) provided with two connecting studs (B, C), as well as a solid-electrolyte capacitor (1) having, embedded in a block (7) of electrically insulating resin with overall a symmetry axis (Z-Z), a capacitor body (2) fitted with two electrodes (3, 4) electrically connected respectively to two connecting blades (5, 6) projecting out of the block (7) to constitute polarised output terminals (+, -) in two connection zones disposed on each side of a transverse plane (P) of the block containing the said axis and disposed in contact with the connecting studs on the support, a third blade (10) projecting from this block, electrically isolated vis-a-vis each of the polarised output terminals and the end of which forms a neutral terminal situated close to a first one (-, b) of these polarised terminals, being separated from it by a space (100) with a zone passing right through it from this first terminal as far as this neutral terminal, the said zone being symmetrical with the second one (+, c) of these polarised terminals with respect to this symmetry axis (Z-Z), and in that this support has a third stud (A) in contact with this neutral terminal and isolated vis-a-vis each of the connecting studs (B, C) and each of the polarised output terminals (-, b, +, c).

9. Component according to Claim 8, characterised in that the connecting stud (B) in contact with the first polarised terminal is separated from the third stud (A) by a space (101) having, parallel to the transverse plane, a dimension (e′) less than that (L) of the second polarised terminal (c).

10. Component according to Claim 8 or Claim 9, characterised in that the connecting stud in contact with the first output terminal (b) has, parallel to the transverse plane, a dimension (h) less than that (H) of the connecting stud in contact with the second output terminal.

11. Component according to Claim 10, characterised in that the third stud in contact with the neutral terminal has, parallel to the transverse plane, a dimension (h′) less than the difference between the dimensions of the connecting studs in contact with the first and second output terminals.

12. Component according to any one of Claims 8 to 11, characterised in that the connecting stud in contact with the first output terminal and the third stud have, parallel to the transverse plane, equal dimensions (h, h′), and in that the dimensions (l, l′) of the first output terminal and of this third blade are equal.

13. Component according to any one of Claims 8 to 12, characterised in that the capacitor body has a porous tantalum core.
